# NEW EUROPEAN PATENT SPECIFICATION

(11) **EP 0 590 867 B2**
(45) Date of publication and mention of the opposition decision: **02.05.2002**
(45) Mention of the grant of the patent: 24.04.1996
(21) Application number: 93307501.2
(22) Date of filing: 22.09.1993
(51) Int. Cl.: B63H 5/125, B63H 25/42, B63H 23/24, H02K 5/20

(54) **Ship propulsion arrangement**
Schiffsantriebsanlage
Installation de propulsion marine

(30) Priority: 28.09.1992 FI 924334
(43) Date of publication of application: 06.04.1994
(73) Proprietor: ABB Azipod Oy, 00980 Helsinki (FI)
(72) Inventor: Salmi, Pekka, F-01650 Vantaa (FI); Ranki, Erkki, F-00730 Helsinki (FI); Laukia, Kari, F-00670 Helsinki (FI); Rosqvist, Ulf, F-06450 Porvoo (FI)
(74) Representative: Newby, John Ross

(56) References cited:
- CA-C- 1 311 657
- FI-A- 76 977
- FR-A- 1 571 890
- US-A- 2 714 866
- THE MOTOR SHIP vol. 73, no. 7 , July 1992 , SUTTON pages 64 - 65 'Azimuthing propulsion unit suits special needs'
- Prospect "Azipod" of the firm KVAERNER-MASA YARDS and ABB
- ABB Technik 1/89 "Generatoren"
- GL technische Liste SG1 d/e, 1987, "Three-phases synchrondus alternator"
- Laradi kesäpäivät, 17.08.92, Rauma
- Declarations of Mr. Järvinen and Mr. Savikurki

## Description

This invention relates to a main propulsion unit of a high power ship or other large marine vessel according to the preamble of claim 1.

A propulsion unit according to the preamble of claim 1 has become known from a brochure titled "Azimuthing Electric Propulsion Drive - Azipod," by Kvaerner Masa-Yards and ABB.

FI-B-76977 discloses a marine propulsion unit comprising a casing turnably supported from the vessel which casing encloses an electrical motor and a propeller shaft and supports outside the casing a propeller on the shaft to be driven by the electrical motor. However, FI-B-76977 is silent on the practical realization of the concept. One aim of this invention is to provide a practical realisation of a propulsion unit of the general kind shown in FI-B-76977 and to create thereby a high power main propulsion unit for a large marine vessel that functions well in practice and is economically and technically of a favourable design.

The invention is particularly well suited for marine vessels the propulsion power of which is of 10 Megawatts or more because the higher the power output of the propulsion unit the more advantageous becomes the ratio between the maximum diameter of a bulbous lower portion of the propulsion unit and the diameter of the propeller. When the propulsive power is about 1.5 MW, the ratio of the diameters of the widest part of the casing of the propulsion unit and the propeller is typically about 0.65. When the power has increased to about 10 MW the ratio in question is likely to be between 0.4 and 0.5. Desirably when applying the invention, the said ratio should be 0.5 or less.

Because no conventionally long propeller shaft and corresponding equipment is needed in the hull of the vessel when applying the invention, extra space is released in the hull for other uses. Furthermore the drive machinery of the vessel can be located in any place within the hull, because the transfer of energy from the drive machinery to the drive motor takes place via electrical cables and not via rigid torque-transmitting shafts. Further the vessel does not need a rudder so that a rudder and its associated structures are not required and there will be no vibrations transmitted from the rudder to the hull of the vessel. At the same time the manoeuvrability of the vessel will be improved by the employment of a propulsion unit of the kind to which this invention relates.

In a propulsion unit according to the invention, the structural strength of the outer casing including the bulbous lower portion of the propulsion unit and its tubular shaft and the cooling requirements of the propulsion equipment located within the casing could pose major problems. These problems are solved by the invention in the manner featured in the following claim 1.

The internal support of the outer casing of the propulsion unit by means of substantially vertical web plates has the advantages that those web plates function (a) as attachment elements for the one or more drive motors, (b) as torque-transmitting elements providing the reaction force from the outer casing to the one or more drive motors and (c) as wall elements of ducts for incoming and outgoing gaseous coolant for the one or more drive motors. Utilising the transverse web plates for a plurality of uses in the manner proposed by this invention has been found to make possible significant reductions in the size and weight of the propulsion unit which is of paramount importance for the efficiency of operation of a marine vessel.

Because the strain acting on the web plates is greater over the upper half of the drive motor than over its lower half, it is advantageous to locate the drive motor in an eccentric position in the bulbous lower portion, so that there is more space in the radial direction of the motor for the web plates holding the drive motor from above than from below. This also permits a smoother transition between the bulbous lower portion of the propulsion unit, which houses the drive motor(s), and its vertical tubular shaft, which is of advantage, especially from a viewpoint of the structural strength of the web plates.

Preferably the web plates form part of the stator of the drive motor. In this way the web plates are integrated as structural support elements of the stator of the or each drive motor, yet also serve to support the casing.

A favourable cooling and supporting structure is obtained by supporting the at least one drive motor by five transversely extending web plates which are each arranged substantially perpendicular to the axis of the propeller shaft. Such an arrangement allows two ducts for outgoing gaseous coolant to be located between outer ducts for ingoing gaseous coolant. Conveniently a proportion of the gaseous coolant can be fed to the or each drive motor to flow between the rotor(s) and stator(s) and to leave the stator(s) through radial openings to flow into the ducts for outgoing coolant. For technical reasons the ducts provided for the incoming coolant are conveniently narrower in the axial direction of the drive motor than those provided for the outgoing coolant, preferably in a manner such that the width of the incoming duct, measured in the axial direction of the drive motor, does not exceed 20 per cent of the length of the drive motor.

For hydrodynamic reasons, it is of advantage that the drive motor be spaced at a considerable distance from the propeller, because the maximum diameter of the casing of the propulsion unit is likely to be at the location of the drive motor. At the same time it is desirable that the mass of the propulsion unit should be distributed substantially uniformly relative to the turning axis of the propulsion unit. Due to this, the centre of gravity of the drive motor cannot be spaced too far from the turning axis of the propulsion unit but we have found it desirable to have the centre of gravity of the drive motor displaced into that half of the vertical cross-section of the tubular shaft which is furthest away from the propeller.

Also for hydrodynamic and electrotechnical reasons, the drive motor (which is preferably an alternating current motor) is built so that the ratio between its length and outer diameter is between 0.5 and 1.8, preferably between 1.0 and 1.6. In this way the optimum design with respect to dimensions and power appears to be obtainable.

A propulsion unit according to the invention is normally located at the rear end of the hull of a marine vessel in a location where the bottom of the hull is considerably higher in the water than the bottom of the centre part of the vessel's hull, so that the propulsion unit is in a protected location and the propeller cannot extend below the deepest point of the hull. This arrangement requires that the bottom surface of the hull, forwardly of the propulsion unit, rises from its greatest depth to the point of attachment of the propulsion unit. This is normally via an obliquely upwardly sloping bottom surface of the hull which is located immediately forwardly of the propulsion unit. When the vessel moves forward, with an arrangement as above described, the flows of water over the oblique surface are substantially in the direction of that surface (i.e. they flow obliquely upwards) where they meet the propeller. When a pulling-propeller is used located at the front end of the propulsion unit, to make the propeller function as efficiently as possible it is advantageous for the propeller shaft to be sensibly parallel with the water currents flowing past the outer casing of the propulsion unit. For this reason the casing of the propulsion unit is conveniently located so that the propeller shaft is at an angle to the turning axis of the tubular shaft, this angle typically being between 89° and 70°, preferably between 85° and 75°. Mounting the propulsion unit at an angle as described has a further advantage of reducing the length of the tubular turning shaft which yields benefits from a structural strength point of view. It is possible to align the propeller shaft with the hull-induced water flows by obliquely mounting the turning axis within the hull. This solution is, however, inferior to an arrangement which employs a sensibly vertical turning axis and a propeller shaft inclined obliquely thereto.

When the propeller for normal propulsion of the vessel, acts as a pushing-propeller, its propulsive power can be increased by providing longitudinal, somewhat obliquely mounted, guide vanes on the outside casing of the propulsion unit to force water flowing past the propulsion unit into a rotational movement opposite to the rotating direction of the propeller. In this way the guide vanes function in principle in the same way as the guide vanes of turbine machinery, which as known, increases the turbine's, and in this case the propeller's, power. In addition to this effect, the presence of guide vanes reinforces the outer casing of the propulsion unit and thus increases its strength. Particularly in ice conditions, the enhanced structure provided by guide vanes has a particularly favourable effect because the guide vanes also act to keep large pieces of ice away from the propulsion unit so they are not crushed against the outer casing which could easily cause such a large localized strain as to deform the casing. This use of longitudinal guide vanes is also of advantage when the propeller works as a pulling-propeller for the normal propulsion of a vessel, but the possibility for using the vanes to enhance the propulsive power is smaller when the propeller works as a pushing-propeller. The term "normal propulsion" of the ship as mentioned herein means the propulsion situation for which the ship has been designed for normal transport. Specific manoeuvring operations may require operating the propeller(s) in ways that differ from the normal propulsion situation.

Irrespective of whether the propeller works as a pulling- or pushing-propeller, the propeller shaft should have a thrust bearing receiving the axial load. In a preferred embodiment the thrust bearing is located at the opposite end of the propulsion unit to the propeller and is desirably cooled by the surrounding water (e.g. via lubricating oil circulating in the bearing). The rotational movement taking place in the bearing can be used to circulate lubricating oil past suitably arranged cooling areas of the outer casing. The thrust bearing and its oil-circulating arrangement is favourably located in a closed space at one end of the propulsion unit.

It may be convenient to operate the space within the casing of the propulsion unit at a pressure which is higher than that of the water outside the casing. This has the advantage of ensuring that water cannot leak into the internal space of the unit but it requires the closure of the space within the casing and the provision of some compressor arrangement and a pressure control unit attached to it. It may be necessary to provide a heat exchanger for cooling the pressurised gas within the interior of the casing.

Cooling of the bearings of the propeller shaft and at least partial cooling of the rotor of the drive motor (or motors) can also be arranged via the propeller shaft by providing a longitudinal cooling duct in the propeller shaft through which water can flow when the ship is moving. In this way the cooling power is at its greatest when the ship is moving at its fastest and this is also the condition when the greatest cooling power is needed.

The invention will now be further described, by way of example, with reference to the accompanying drawings, in which:
Figure 1 is a schematic perspective view, partly in section, of a propulsion unit according to the invention without the propeller,
Figure 2 is a schematic longitudinal section of a propulsion unit according to the invention utilizing a pushing-propeller,
Figure 3 is a simple schematic cross-sectional view of a preferred embodiment of propulsion unit according to the invention,
Figure 4 is a perspective view of a further embodiment of propulsion unit according to the invention,
Figure 5 is a schematic side view of a ship equipped with a propulsion unit according to the invention,
Figure 6 shows a pressurised propulsion unit of the general type shown in Figure 2, and
Figure 7 is a longitudinal section through a twinengined propulsion unit according to the invention.

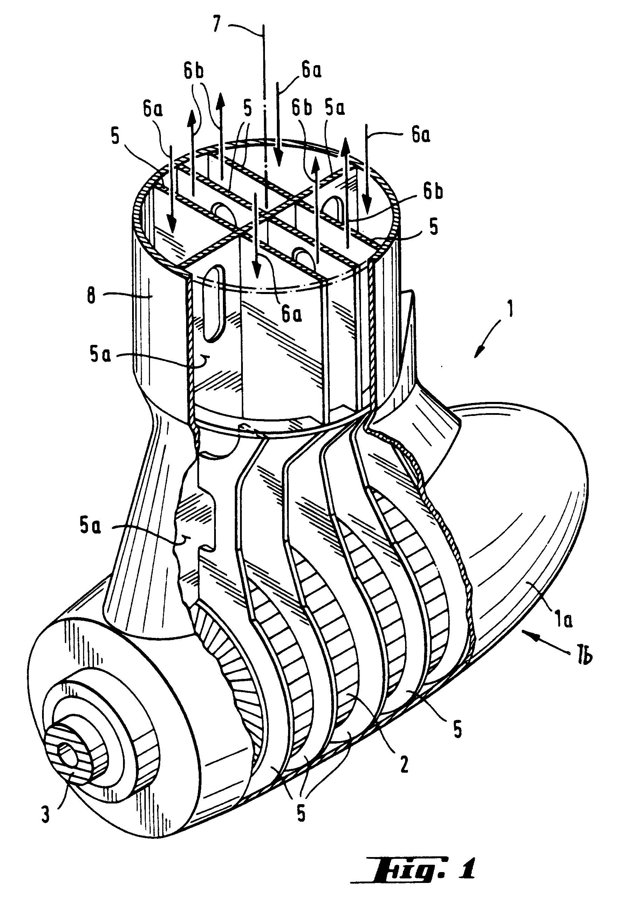

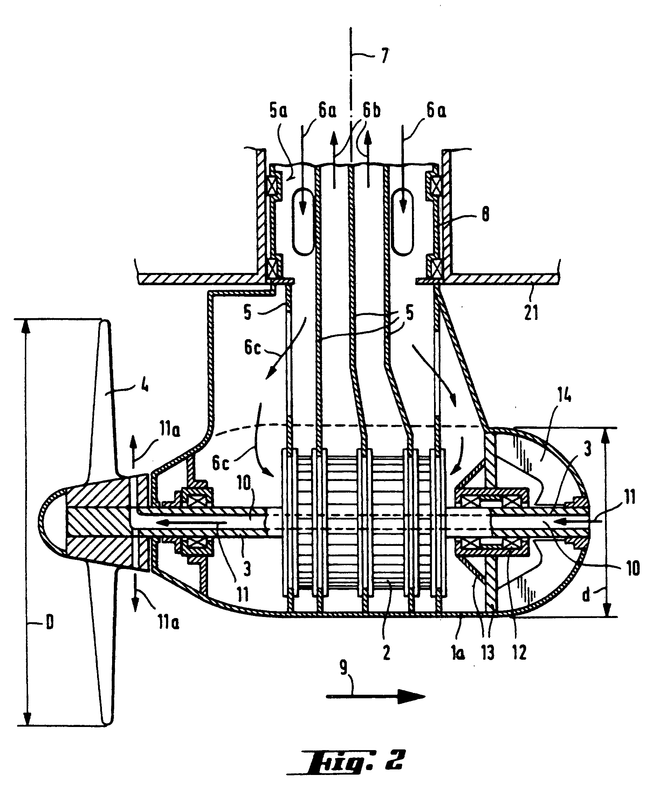

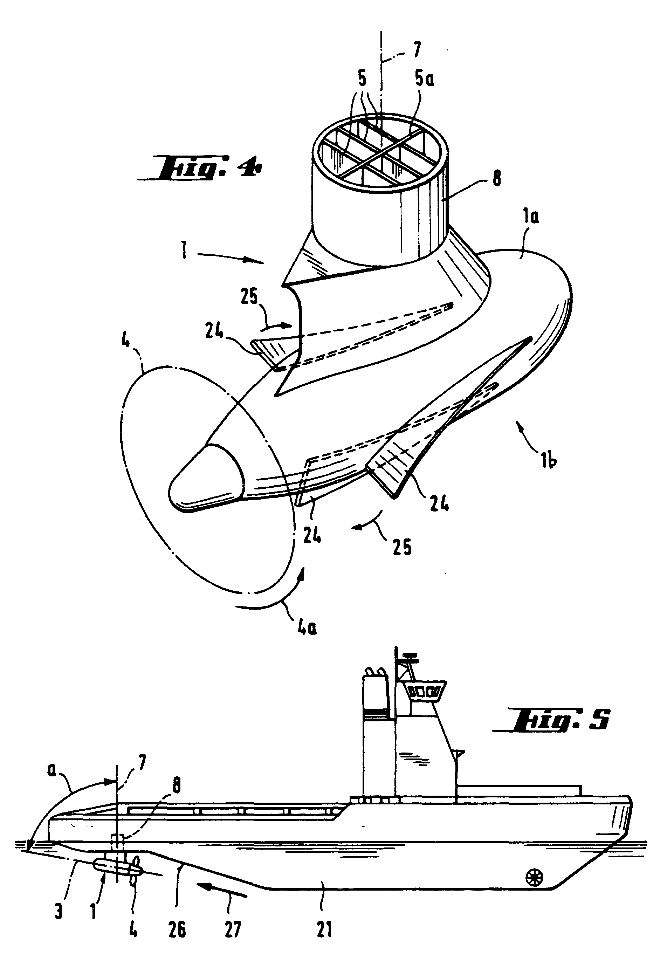

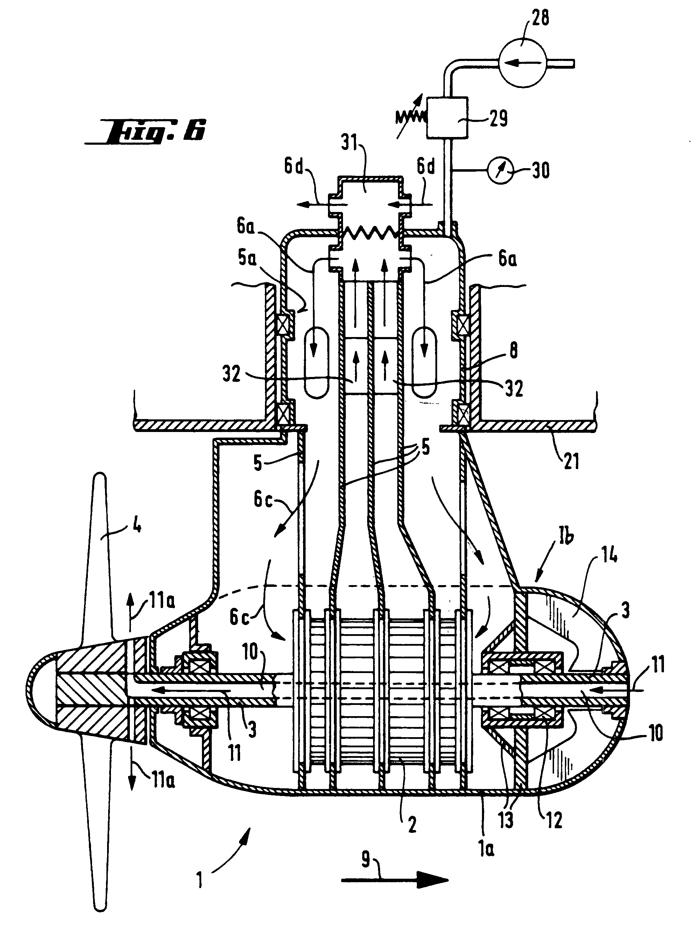

In the drawings, 1a indicates the outer casing of a main propeller-driven propulsion unit 1, 2 an electrical A.C. drive motor inside the casing 1a, 3 a propeller shaft directly driven by the motor 2 and 4 a propeller attached to the propeller shaft 3 and directly driven thereby. In Figure 1, the propeller is not shown and in Figure 4 the propeller 4 is shown only schematically. The propeller 4 may be a pulling- or pushing-propeller. The embodiments shown in Figures 1 and 5 use a pulling-propeller, the embodiments shown in Figures 2, 4 and 6 a pushing-propeller. The drive motor 2 is attached to the outer casing 1a of the propulsion unit 1 by means of a number of transverse web plates 5. These web plates are attached directly to the stator of the drive motor 2, so that they form the supporting structure of the stator and at the same time attach the drive motor 2 to the outer casing 1a. Further, the web plates 5 transmit the reaction forces to the torque developed by the motor 2 to the casing 1a. At the same time the plates 5 function as stiffeners for the casing 1a. Furthermore, the plates 5 form walls of incoming and outgoing ducts for gaseous coolant (cooling air) needed to cool the drive motor 2 as indicated by the arrows 6a and 6b in Figures 1, 2, 6 and 7. The outer casing 1a and the drive motor 2 are also supported by at least one longitudinal web plate 5a (shown in Figures 1 and 4).

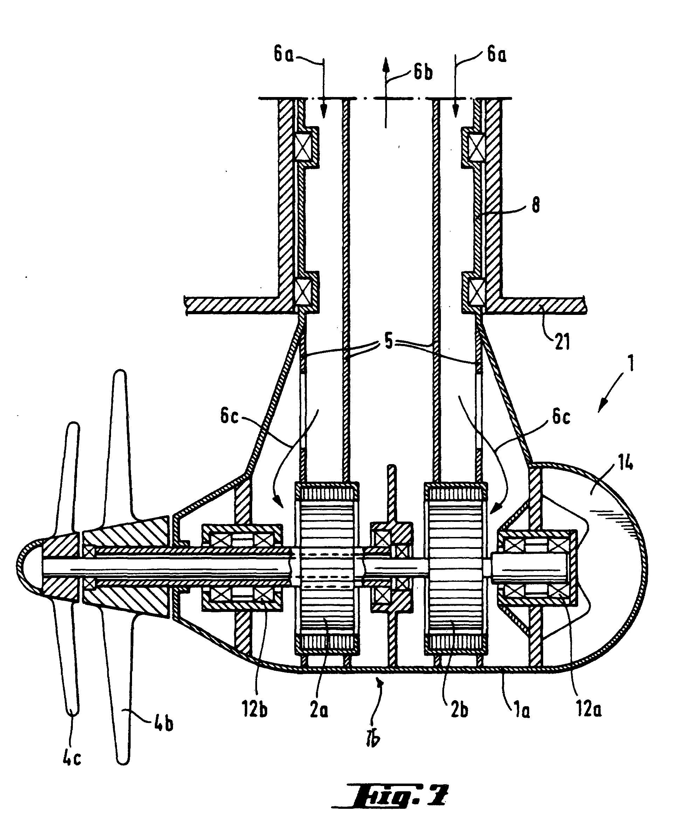

It can be seen from Figure 2 that the ducts for the incoming cooling air 6a are located at the ends of the drive motor 2 and the ducts for the outgoing cooling air 6b are located in the central area of the drive motor. The arrows 6c in Figures 2 and 6 indicate how part of the cooling air fed to the motor 2 is led to an end portion of the motor, where it passes into the air gap between the stator and the rotor and flows through that gap and through radial slots in the stator out into the duct for the outgoing cooling air 6b. As shown, the width of the ducts of the incoming cooling air 6a can be noticeably smaller in the axial direction of the motor than the corresponding width of the ducts 6b for the outgoing cooling air.

The drive motor 2 is not centrally located below the turning axis 7 of the propulsion unit 1. The centre of gravity of the drive motor 2 or its central point, is located within that half of a vertical cross-section of the propulsion unit 1 which is furthest away from the propeller 4. This arrangement provides a favourable mass distribution of the unit 1 relative to the turning axis 7 provided by a tubular shaft 8 of the unit 1. This disposition is also favourable for a good streamlined shaping of the unit 1. In Figure 2 the ratio of the diameter d of a bulbous lower portion 1b of the unit 1 to the diameter D of the propeller 4 is less than 0.5, which is relatively favourable.

If the centre of gravity of the bulbous lower portion 1b is significantly displaced from the axis 7 of the tubular shaft 8 it may be necessary to increase the weight of the unit 1 to strengthen the shaft against the strain acting on it when full propulsion power is being applied.

Figure 2 shows a pushing-propeller 4 so that the main moving direction of the ship is in the direction of the arrow 9. The cooling effect of the surrounding water can be utilized to cool the bearings of the propeller shaft 3 by arranging an axial cooling duct 10 in the propeller shaft. The surrounding water is pushed into the duct 10 at the upstream end as shown by the arrows 11. These water currents 11 are stronger the faster the ship moves and the faster the ship moves the greater the need for cooling. The flow of the water current 11 can be increased by arranging radial ducts at the downstream, or propeller, end through which ducts a flow enhanced by centrifugal force will occur as shown by the arrows 11a. Where the propeller 4 is a pulling-propeller, the arrow 9 will be reversed and the simplest solution is to arrange a cooling duct 10 that extends in a linear manner axially through the entire propeller shaft 3 and the hub of the propeller 4.

In Figure 2 the axial thrust of the propeller shaft 3 is taken up by a thrust bearing 12, which is the bearing requiring the greatest degree of cooling. This bearing 12 is shown separated by means of walls 13 from the rest of the internal space of the propeller unit 1. A closed space 14 is thereby formed at one end of the unit 1, which space is strongly cooled by the surrounding water. The cooling effect can be enhanced by circulating the lubricating oil of the bearing 12 in the space 14 in such a way that it is subject to a strong cooling effect from the surrounding water.

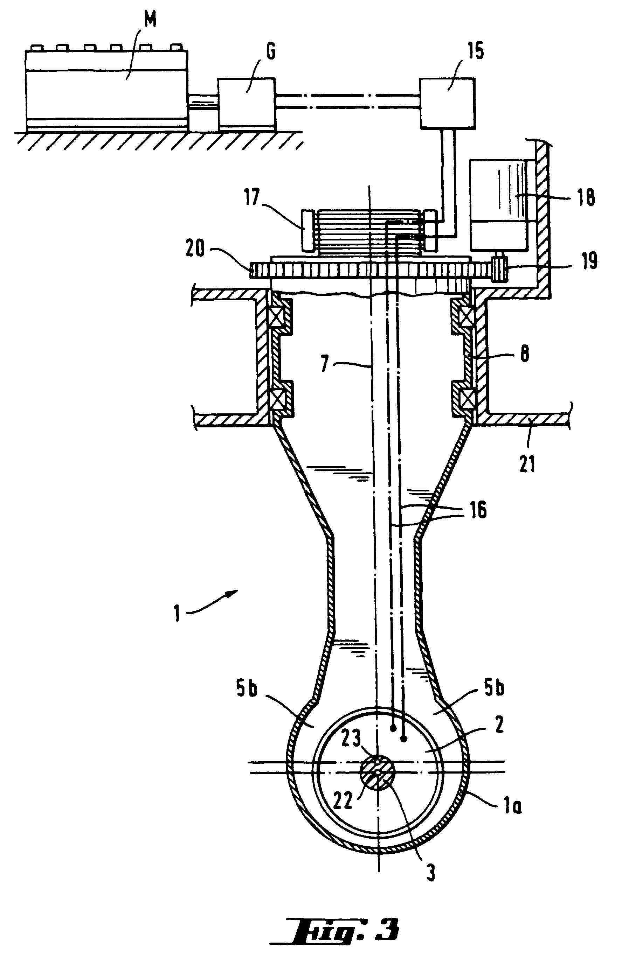

Figure 3 schematically shows a main engine M of a ship and an electrical generator G driven by it. This combination is connected to a central control device 15, which transmits the power produced by the generator through electrical cables 16 to the drive motor 2. The cables 16 are only schematically shown. Because the drive motor 2 is in a turnable unit 1, the electrical power has to be led to the drive motor 2 via a slip-ring device 17. The turning of the propulsion unit 1 is carried out by means of a steering motor 18, which, via a pinion 19, acts on a gearing 20 attached to the tubular shaft 8 of the propulsion unit 1. Structures forming part of the ship's hull have been indicated by numeral 21 in Figures 2, 3 and 5-7.

It is also evident from Figure 3 that the drive motor 2 is eccentrically mounted in the bulbous lower portion 1b of the casing 1a of the propulsion unit 1. The centre point of the motor 2 is shown at 22 and this is lower than the centre point 23 of the bulbous portion 1b of the casing 1a. Because of this, part of the transverse web plates 5 surrounding the motor 2 are wider (i.e. at 5b) over the upper half of the motor than over the lower half, an arrangement which is favourable from the point of view of the structural strength of the unit 1. The eccentricity between points 22 and 23 can be between about 3 and 5 per cent of the diameter of the stator 2.

Figure 4 shows how longitudinally extending, slightly obliquely mounted, guide vanes 24 can be provided on the outside of the propulsion unit 1. These guide vanes are angled in such a way that they impart to the water flowing past the unit 1 a rotational movement in the direction of the arrow 25, that is, in a direction opposite to the rotational direction (see the arrow 4a) of the propeller 4. This has an enhancing influence on the propulsive power of the propeller. The vanes 24 also act as outer stiffeners for the casing 1a.

In Figure 5 the propeller 4 is a pulling-propeller and the propulsion unit 1 has been mounted obliquely so that the angle "a" between its turning axis 7 and the axis of the propeller shaft 3 is about 80°. This is a favourable solution, especially when the propeller is a pulling-propeller, in which case the propeller is close to an upwardly rising bottom rear portion 26 of the ship's hull, where the water flows mainly in the direction of the arrow 27. The oblique positioning of the propulsion unit 1 has the effect that the propeller works substantially in line with the direction of the water flowing up past it, which maximises propulsion efficiency. Angling the unit 1 relative to the surface of the water as described above reduces the length of the tubular shaft 8 of the propulsion unit 1 which gives noticeable advantages with regard to structural strength.

In Figure 6, the entire internal space of the propulsion unit 1 with its tubular shaft 8 is closed and maintained under pressure. The pressure is kept above that of the highest pressure of the surrounding water, so that water cannot leak into the motor space and thus cannot cause damage to the equipment in the propulsion unit. This over-pressure is maintained by means of a compressor 28 controlled by an automatic control device 29. Required gauge- or supervision-equipment 30 is connected to the system. In order to ensure that the cooling of the drive motor 2 functions properly, a heat exchanger 31 is shown, to which coolant streams (such as water or air) are fed as indicated by arrows 6d. For the forced circulation of the pressurised gas inside the closed space one or more fans 32 can be used. Cooling of the drive motor 2 can be effected by the use of one or more heat exchangers even in a case where the internal space of the propulsion unit is not pressurised or closed for other reasons.

In Figure 7, two independently operating drive motors 2a and 2b are shown in the propulsion unit 1. The drive motor 2a is connected to a propeller 4b and the drive motor 2b is connected to a propeller 4c. In the embodiment illustrated the propellers 4b and 4c are at the same end of the propulsion unit 1. However, it is also feasible to locate the propellers at opposite ends of the propulsion unit 1. The propellers 4b and 4c can rotate in opposite directions. Two thrust bearings 12a and 12b would be needed in a propulsion arrangement that has two propellers. The air cooling of the drive motors 2a and 2b can be arranged substantially in the same way as described with reference to Figures 1 and 2, but there are only four web plates 5 arranged perpendicularly to the shafts of the drive motors in the embodiment according to Figure 7. The use of two or more propellers rotating in pairs in different directions is known per se from FI-B-75128. However, there is a significant advantage in propulsion efficiency by having two propellers each driven from a separate electrical motor and this is particularly true at high propulsion powers where a significantly more favourable solution (both in terms of economy and technology) is possible.

The invention is not restricted to the embodiments shown, since several modifications are feasible within the scope of the following claims.

## Claims

1. A main propulsion unit (1) of a high power ship or other large marine vessel comprising an outer casing (1a) defining a tubular shaft (8) turnable about an axis substantially normal to the water surface and a bulbous lower portion (1b) connected to and turnable together with the tubular shaft (8), said casing (1a) defining in the bulbous portion (1b) an internal space containing an electrical drive motor (2) and a propeller shaft (3) connected to at least one propeller (4) external of the outer casing (1a), the outer casing (1a) being on its inside, supported by a plurality of web plates (5), which are arranged to act, simultaneously, as structural elements stiffening and supporting the outer casing (1a), as elements securing the drive motor (2) in place and transmitting to the casing (1a) reaction forces to the torque developed by the drive motor (2) **characterised in that** the web plates also act as for incoming and outgoing gaseous coolant for the drive motor (2) whereby a part of the gaseous coolant is led through a duct (6a) for incomming gaseous coolant, into the gap between the stator and the rotor of the drive motor and out into a duct (6b) for outgoing gaseous coolant.

2. A propulsion unit (1) according to claim 1, **characterised in that** the centre (22) of the drive motor (2) is below the centre (23) of the bulbous lower portion (1b) of the casing (1 a) so that the drive motor (2) has an eccentric position in the bulbous lower portion (1b) providing more space in the radial direction of the motor above the level of the centre (22) of the drive motor than below that level.

3. A propulsion unit (1) according to claim 1 or claim 2, **characterised in that** the web plates (5) holding the drive motor (2) are connected directly to the stator of the motor, thereby forming part of the structural framework of the stator.

4. A propulsion unit (1) according to any preceding claim, **characterised in that** the drive motor (2) is supported by five web plates (5) each arranged substantially perpendicular to the axis of the propeller shaft (3).

5. A propulsion unit (1) according to any preceding claim, **characterised in that** the centre of gravity of the drive motor (2) is within that half of a vertical cross-section of the propulsion unit (1) which is furthest from the propeller (4).

6. A propulsion unit (1) according to any preceding claim, **characterised in that** the ratio of the length of the drive motor to its outer diameter lies between 0.5 and 1.8 and preferably between 1.0 and 1.6.

7. A propulsion unit according to any preceding claim, **characterised in that** the angle between the axis of the propeller shaft (3) and the turning axis (7) of the propulsion unit (1) relative to the vessel (21) is between 89° and 70°, preferably between 85° and 75°, whereby the axial direction of the propeller shaft (3) substantially corresponds to the flow direction of water flowing past the casing (1a).

8. A propulsion unit (1) according to any preceding claim, **characterised in that** guide vanes (24) are provided on the casing (1a) to deflect water flowing past the casing (1a) to thereby increase the propulsive power of the propeller (4) and at the same time stiffen the outer casing (1a) of the propulsion unit (1).

9. A propulsion unit according to any preceding claim, **characterised in that** an oil-lubricated thrust bearing (12) for absorbing axial load from the propeller shaft (3) is located at the opposite end of the propulsion unit (1) from the propeller (4), and **in that** the cooling effect of water on the casing is arranged to cool the lubricating oil of the bearing (12).

10. A propulsion unit (1) according to any preceding claim, **characterised in that** the internal space of the casing (1a) is pressurised to a level above that of the water surrounding the drive unit, and **in that** cooling of the drive motor (2) is effected via a heat exchanger (31).

11. A propulsion unit (1) according to any preceding claim, **characterised in that** a cooling duct (10) is arranged axially in the propeller shaft (3) through which duct (10) surrounding water may flow.

12. A propulsion unit (1) according to any preceding claim, **characterised in that** there are at least two independently functioning drive motors (2a, 2b) in the propulsion unit (1), each of which motors (2a, 2b) is connected to drive its own propulsion propeller (4b, 4c).

13. A rudderless marine vessel **characterised in that** it incorporates a propulsion unit (1) as claimed in any preceding claim and includes an electrical generator (G), an engine (M) for the generator and electrical cables (16) for feeding electrical power from the generator (G) to the at least one drive motor (2) in the propulsion unit (1) via the tubular shaft (8).

## Patentansprüche

1. Hauptantriebsanlage (1) eines starkmotorigen Schiffes oder anderen großen Seeschiffes, bestehend aus einem äußeren Gehäuse (1a), das eine Rohrwelle (8) umfasst, die drehbar um eine im wesentlichen normal zur Wasseroberfläche liegende Achse ist, und einen kugelförmigen unteren Teil (1b), der mit der Rohrwelle (8) verbunden und zusammen mit dieser drehbar ist, welches Gehäuse (1a) im kugelförmigen Teil (1b) einen Innenraum aufweist, der einen elektrischen Antriebsmotor (2) und eine Propellerwelle (3) enthält, die mit mindestens einem Propeller (4) außerhalb des äußeren Gehäuses (1a) verbunden ist, wobei das äußere Gehäuse (1a) auf seiner Innenseite durch eine Vielzahl von Stegblechen (5) gestützt ist, die so angeordnet sind, dass sie gleichzeitig als Bauteile das äußere Gehäuse (1a) versteifen und stützen, als Sicherungselemente den Antriebsmotor (2) in Position halten und die Reaktionskräfte auf das vom Antriebsmotor (2) entwickelte Drehmoment auf das Gehäuse (1a) übertragen,
**dadurch gekennzeichnet, dass** die Stegbleche auch als Wandelemente von Leitungen für eintretendes und austretendes, gasgasförmiges Kühlmittel für den Antriebsmotor dienen, wobei ein Teil des gasförmigen Kühlmittels durch eine Leitung (6a) für eintretendes gasförmiges Kühlmittel in den Spalt zwischen dem Stator und dem Rotor des Antriebsmotors und hinaus in eine Leitung (6b) für austretendes gasförmiges Kühlmittel geführt wird.

2. Antriebsanlage (1) nach Anspruch 1,
**dadurch gekennzeichnet, dass** die Mitte (22) des Antriebsmotors (2) unter der Mitte (23) des kugelförmigen unteren Teils (1b) des Gehäuses (1a) liegt, so dass der Antriebsmotor (2) im kugelförmigen unteren Teil (1b) eine exzentrische Lage einnimmt, wodurch mehr Platz in radialer Richtung des Motors oberhalb des Mittelpunktes (22) des Antriebsmotors als unterhalb dieser Ebene entsteht.

3. Antriebsanlage (1) nach Anspruch 1 oder 2,
**dadurch gekennzeichnet, dass** die Stegbleche (5), welche den Antriebsmotor (2) halten, direkt mit dem Stator des Motors verbunden und somit Teil des Statorrahmens sind.

4. Antriebsanlage (1) nach einem der vorstehenden Ansprüche, **dadurch gekennzeichnet, daß** der Antriebsmotor (2) von fünf Stegblechen (5) getragen wird, von denen jedes im wesentlichen senkrecht zur Achse der Propellerwelle (3) angeordnet ist.

5. Antriebsanlage (1) nach einem der vorstehenden Ansprüche, **dadurch gekennzeichnet, daß** der Schwerpunkt des Antriebsmotors (2) innerhalb derjenigen Hälfte eines vertikalen Querschnitts der Antriebsanlage (1) vorgesehen ist, die am weitesten vom Propeller (4) entfernt liegt.

6. Antriebsanlage (1) nach einem der vorstehenden Ansprüche, **dadurch gekennzeichnet, daß** das Verhältnis der Länge des Antriebsmotors zu seinem äußeren Durchmesser 0,5 bis 1,8, vorzugsweise 1,0 bis 1,6 beträgt.

7. Antriebsanlage nach einem der vorstehenden Ansprüche, **dadurch gekennzeichnet, daß** der Winkel zwischen der Achse der Propellerwelle (3) und der Drehachse (7) der Antriebsanlage (1) in bezug auf das Schiff (21) zwischen 89° und 70° vorzugsweise 85° bis 75° beträgt, wobei die axiale Richtung der Propellerwelle (3) im wesentlichen der Strömungsrichtung des über das Gehäuse (1a) fließenden Wassers entspricht.

8. Antriebsanlage (1) nach einem der vorstehenden Ansprüche, **dadurch gekennzeichnet, daß** Leitschaufeln (24) auf dem Gehäuse (1a) vorgesehen sind, um das über das Gehäuse (1a) fließende Wasser abzulenken, so daß die Antriebsleistung des Propellers (4) erhöht und gleichzeitig das äußere Gehäuse (1a) der Antriebsanlage (1) versteift wird.

9. Antriebsanlage nach einem der vorstehenden Ansprüche, **dadurch gekennzeichnet, daß** ein ölgeschmiertes Drucklager (12) zur Aufnahme der Axiallast von der Propellerwelle (3) an dem dem Propeller (4) gegenüberliegenden Ende der Antriebsanlage (1) montiert ist, und dadurch, daß die Kühlwirkung des Wassers auf das Gehäuse so vorgesehen ist, daß das Schmieröl des Lagers (12) gekühlt wird.

10. Antriebsanlage (1) nach einem der vorstehenden Ansprüche, **dadurch gekennzeichnet, daß** der Innenraum des Gehäuses (1a) bis zu einer über dem Stand des die Antriebsanlage umgebenden Wassers liegenden Höhe unter Druck gesetzt wird und daß die Kühlung des Antriebsmotors (2) über einen Wärmetauscher (31) erfolgt.

11. Antriebsanlage (1) nach einem der vorstehenden Ansprüche, **dadurch gekennzeichnet, daß** eine Kühlleitung (10) axial in der Propellerwelle (3) angeordnet ist und daß durch diese Leitung (10) Umgebungswasser fließen kann.

12. Antriebsanlage (1) nach einem der vorstehenden Ansprüche, **dadurch gekennzeichnet, daß** mindestens zwei unabhängig arbeitende Antriebsmotoren (2a, 2b) in der Antriebsanlage (1) vorgesehen sind, wobei jeder dieser Motoren (2a, 2b) seinen eigenen Propeller (4b, 4c) antreibt.

13. Ruderloses Seeschiff, **dadurch gekennzeichnet, daß** es eine Antriebsanlage (1), gemäß einem der vorstehenden Ansprüche sowie einen elektrischen Generator (G), eine Maschine (M) für den Generator und elektrische Kabel (16) zum Einspeisen der elektrischen Leistung vom Generator (G) zu mindestens einem Antriebsmotor (2) in der Antriebsanlage (1) über die Rohrwelle (8) umfaßt.

## Revendications

1. Unité de propulsion principale (1) d'un bateau de grande puissance ou d'un autre gros navire comprenant un boîtier extérieur (1a) définissant un arbre tubulaire (8) pouvant tourner autour d'un axe sensiblement perpendiculaire à la surface de l'eau et une partie inférieure en forme de bulbe (1b) raccordée à et pouvant tourner solidairement avec l'arbre tubulaire (8), ledit boîtier (1a) définissant dans la partie en forme de bulbe(1b) un espace intérieur contenant un moteur d'entraînement électrique (2) et un arbre d'hélice (3) raccordé à au moins une hélice (4) extérieure au boîtier extérieur (1a) le boîtier extérieur (1a) étant à l'intérieur de celui-ci, supporté par une pluralité de plaques formant couples (5) qui sont prévues pour jouer le rôle, simultanément, d'éléments structurels de renfort et de soutien du boîtier extérieur (1a), d'éléments de fixation du moteur d'entraînement (2) et de transmission au boîtier (1a) de forces de réaction au couple moteur développé par le moteur d'entraînement (2) **caractérisée en ce que** les plaques formant couples jouent aussi le rôle d'éléments formant parois de conduits destinés à l'admission et à l'échappement de gaz de refroidissement pour le moteur d'entraînement, si bien qu'une partie du gaz de refroidissement est amenée à travers un conduit (6a) pour faire entrer le gaz de refroidissement, dans l'espace entre le stator et le rotor du moteur d'entraînement et sort par un conduit (6b) pour faire sortir le gaz de refroidissement.

2. Unité de propulsion (1) selon la revendication 1, **caractérisée en ce que** le centre (22) du moteur d'entraînement (2) se trouve en dessous du centre (23) de la partie inférieure en forme de bulbe (1b) du boîtier (1a) de telle sorte que le moteur d'entraînement (2) a une position excentrique dans la partie inférieure en forme de bulbe (1b) fournissant un espace dans la direction radiale du moteur au dessus du niveau du centre (22) du moteur d'entraînement supérieur à celui en dessous de ce niveau.

3. Unité de propulsion (1) selon la revendication 1 ou la revendication 2, **caractérisée en ce que** les plaques formant couples maintenant le moteur d'entraînement (2) sont raccordées directement au stator du moteur, formant ainsi une partie du cadre structurelle du stator.

4. Unité de propulsion (1) selon l'une quelconque des revendications précédentes, **caractérisée en ce que** le moteur d'entraînement (2) est supporté par cinq plaques formant couples (5) chacune étant placés de manière sensiblement perpendiculaire à l'axe de l'arbre d'hélice. (3).

5. Unité de propulsion (1) selon l'une quelconque des revendications précédentes, **caractérisée en ce que** le centre de gravité du moteur d'entraînement (2) se trouve dans la moitié d'une section transversale verticale de l'unité de propulsion (1) qui est la plus éloignée de l'hélice (4).

6. Unité de propulsion (1) selon l'une quelconque des revendications précédentes, **caractérisée en ce que** le rapport de la longueur du moteur d'entraînement à son diamètre extérieur est situé entre 0,5 et 1,8 et de préférence entre 1,0 et 1,6.

7. Unité de propulsion selon l'une quelconque des revendications précédentes, **caractérisée en ce que** l'angle compris entre l'axe de l'arbre d'hélice (3) et l'axe de rotation (7) de l'unité de propulsion (1) par rapport au navire (21) est compris entre 89° et 70°, de préférence entre 85° et 75°, d'où il résulte que la direction axiale de l'arbre d'hélice (3) correspond sensiblement à la direction d'écoulement de l'eau circulant autour du boîtier (1a).

8. Unité de propulsion (1) selon l'une quelconque des revendications précédentes, **caractérisée en ce que** d'ailerons (24) sont fournis sur le boîtier pour dévier l'eau circulant autour du boîtier (1a) afin d'augmenter ainsi la puissance de propulsion de l'hélice (4) et en même temps de renforcer le boîtier extérieur (1a) de l'unité de propulsion (1).

9. Unité de propulsion selon l'une quelconque des revendications précédentes, **caractérisée en ce qu'**un palier de butée (12) lubrifiée avec de l'huile destiné à absorber la charge axiale provenant de l'arbre d'hélice (3) est placé à l'extrémité opposée de l'unité de propulsion (1) par rapport à l'hélice (4), et **en ce que** l'effet de refroidissement de l'eau sur le boîtier est conçu pour refroidir l'huile de lubrification du palier (12).

10. Unité de propulsion (1) selon l'une quelconque des revendications précédentes, **caractérisée en ce que** l'espace intérieur du boîtier (1a) est à un niveau de pression supérieur à celui de l'eau entourant l'unité d'entraînement, et **en ce que** le refroidissement du moteur d'entraînement (2) se fait par l'intermédiaire d'un échangeur thermique (31).

11. Unité de propulsion (1) selon l'une quelconque des revendications précédentes, **caractérisée en ce qu'**un conduit de refroidissement (10) est agencé axialement dans l'arbre d'hélice (3) conduit à travers lequel l'eau environnante peut circuler.

12. Unité de propulsion (1) selon l'une quelconque des revendications précédentes, **caractérisée en ce qu'**il y a au moins deux moteurs d'entraînement (2a, 2b) fonctionnant indépendamment dans l'unité de propulsion (1), chacun des moteurs (2a, 2b) étant raccordé pour entraîner sa propre hélice de propulsion (4b, 4c).

13. Navire sans gouvernail **caractérisé en ce qu'**il incorpore une unité de propulsion (1) selon l'une quelconque des revendications précédentes et inclut un générateur électrique (G), un moteur (M) pour le générateur et des câbles électriques (16) destinés à alimenter en énergie électrique depuis le générateur (G) au moins un moteur d'entraînement (2) dans l'unité de propulsion (1) par l'intermédiaire de l'arbre tubulaire (8).
